(19) Europäisches Patentamt
European Patent Office
Office européen des brevets

(11) Veröffentlichungsnummer : **0 131 038**
**B1**

(12) # EUROPÄISCHE PATENTSCHRIFT

(45) Veröffentlichungstag der Patentschrift : **25.03.87**

(51) Int. Cl.$^4$ : **C 09 D 5/44**, C 08 G 59/56, C 08 G 59/64, C 25 D 13/06

(21) Anmeldenummer : **84900495.7**

(22) Anmeldetag : **05.01.84**

(86) Internationale Anmeldenummer : **PCT/DE 84/00005**

(87) Internationale Veröffentlichungsnummer : **WO/8402714 (19.07.84 Gazette 84/17)**

(54) **WASSERDISPERGIERBARE BINDEMITTEL FÜR KATIONISCHE ELEKTROTAUCHLACKE UND VERFAHREN ZU IHRER HERSTELLUNG.**

(30) Priorität : **10.01.83 DE 3300583**

(43) Veröffentlichungstag der Anmeldung : **16.01.85 Patentblatt 85/03**

(45) Bekanntmachung des Hinweises auf die Patenterteilung : **25.03.87 Patentblatt 87/13**

(84) Benannte Vertragsstaaten : **AT BE CH DE FR GB LI NL SE**

(56) Entgegenhaltungen :
**EP-A- 0 074 634**
**FR-A- 1 531 763**
**US-A- 4 260 720**

(73) Patentinhaber : **BASF Lacke + Farben Aktiengesellschaft**
**Max-Winkelmann-Strasse 80**
**D-4400 Münster (DE)**

(72) Erfinder : **GEIST, Michael**
**Rubensstrasse 251**
**D-4400 Münster (DE)**
Erfinder : **OTT, Günther**
**von Holte Strasse 101 a**
**D-4400 Münster-Wolbeck (DE)**
Erfinder : **SCHÖN, Georg**
**Schillerstrasse 2**
**D-4416 Everswinkel (DE)**

(74) Vertreter : **Habbel, Hans-Georg, Dipl.-Ing. et al**
**Postfach 3429 Am Kanonengraben 11**
**D-4400 Münster (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 131 038 B1

Jouve, 18, rue St-Denis, 75001 Paris, France

**Beschreibung**

Die Erfindung betrifft wasserdispergierbare Bindemittel für kationische Elektrotauchlacke auf der Basis von Epoxidharzen mit einem Molekulargewicht von mindestens 350 (A), mit den Epoxidgruppen von (A) reaktionsfähigen, polyfunktionellen Verbindungen mit aktivem Wasserstoff (B) sowie Aminoalkoholen (C), welche ggf. ein tertiäres Stickstoffatom besitzen.

Kationische wasserdispergierbare Kunstharze als Bindemittel für Elektrotauchlacke sind bekannt. So beschreibt z. B. die DE-OS 2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d. h. die mit ihnen beschichteten Gegenstände erhalten eine zusätzliche Decklackschicht.

Aus der EP-A-74 634 sind Bindemittel bekannt, die aus Epoxidharzen, polyfunktionellen Alkoholen und Aminoalkoholen mit einem tertiären Stickstoffatom erhältlich sind. Gemäß dieser europäischen Patentanmeldung werden Milchsäuresalze der tertiären Stickstoff enthaltenen Alkanolamine eingesetzt. Diese reagieren über den protonierten Stickstoff mit den noch vorhandenen Epoxidgruppen unter Öffnung des Ringes, wobei sich Harze mit quartären Ammoniumionen bilden. Die Hydroxylgruppen des Aminoalkohols stehen für eine nachfolgende Vernetzung zur Verfügung.

Gemäß der EP-A-74 634 kann die Umsetzung des tertiären Amins mit dem Epoxidharz in Gegenwart von Wasser erfolgen. Dabei bildet sich zunächst ein quartäres Ammoniumhydroxid, welches über den protonierten Stickstoff den Epoxidring unter Ausbildung quartäre Ammoniumgruppen enthaltender Polymerer angreift.

Es erfolgt also die Verknüpfung des Epoxidharzes mit dem Amin über das Stickstoffatom.

Ähnliche Systeme sind aus der US-PS 4 260 720 bekannt. Die beschriebenen wasserdispergierbaren Bindemittel basieren auf Epoxidharzen, Polymercaptoverbindungen und tertiären Aminoalkoholen.

Auch in diesem Fall erfolgt die Verknüpfung des Aminoalkohols mit den Glycidylgruppen über das Stickstoffatom.

Der Erfindung liegt die Aufgabe zugrunde, wasserdispergierbare Bindemittel für kationische Elektrotauch-Lacke anzugeben, bei deren Verwendung verbesserte Beschichtungen erzielt werden und für die insbesondere eine erweiterte Rohstoffbasis zur Verfügung steht.

Diese Aufgabe wird bei Bindemitteln der eingangs genannten Art erfindungsgemäß dadurch gelöst, daß als Komponente (B) polyfunktionelle Alkohole, Carbonsäuren und/oder SH-Verbindungen mit einem Molekulargewicht von 300 bis 5 000 und als Komponente (C) Aminoalkohole mit mindestens einem verkappten primären oder einem tertiären Stickstoffatom eingesetzt werden mit der Maßgabe, daß bei der Herstellung der Bindemittel die Reaktion mit der Komponente (C) in einem weitgehend wasserfreien Medium erfolgt.

Die neuen kationischen Kunstharze dieser Erfindung entstehen durch Kettenverlängerung von Polyepoxiden mit mindestens zwei Epoxygruppen pro Molekül. Die Kettenverlängerung wird durch organisches Polyol erreicht, das niedermolekular oder hochmolekular sein kann und mindestens zwei und bevorzugt ebenfalls zwei alkoholische primäre Hydroxylgruppen im Molekül enthält.

Die Kettenverlängerung wird bevorzugt in Gegenwart eines tertiären Amins als Katalysator durchgeführt.

An das Polyepoxid ist des weiteren ein Aminoalkohol angelagert, wobei das Stickstoffatom des Aminoalkohols ein verkapptes primäres oder ein tertiäres Stickstoffatom ist.

Es wurde festgestellt, daß durch die Kettenverlängerung der Polyepoxide die Durchschlagspannung der hergestellten Filme verbessert wird. Gleichzeitig wird auch das Fließvermögen und der Verlauf der Filme verbessert.

In manchen Fällen ist auch eine Erhöhung der Flexibilität zu beobachten. Es werden weichere Filme erhalten und die Abscheidung kann bei niedrigeren Badtemperaturen erfolgen.

Als Polyepoxide (Komponente A) können bei der vorliegenden Erfindung beliebige Materialien verwendet werden, die zwei oder mehr Epoxygruppen im Molekül enthalten. Bevorzugt sind Verbindungen mit zwei Epoxygruppen im Molekül. Die Polyepoxide haben ein relativ hohes Molekulargewicht von mindestens 350, bevorzugt 350 bis 2 000. Die Polyepoxide können zum Beispiel Polyglycidylether von Polyphenolen sein, wie Bisphenole, z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl-1)-2,2-propan, 4,4'-Dihydroxybenzophenon, Bis(4-hydroxyphenyl)-1,1-ethan, Bis(4-hydroxyphenyl)-1,1-isobutan, Bis(4-hydroxy-tertiär-butyl-phenyl)-2,2-propan, Bis(2-hydroxynaphthyl)methan, 1,5-Dihydroxynaphthalin. In manchen Fällen ist es wünschenswert Polyepoxide von höherem Molekulargewicht mit aromatischen Gruppen zu erhalten. Dies kann dadurch erreicht werden, daß man die vorhingenannten Diglycidylether mit einem Polyphenol wie

Bisphenol A umsetzt und dann das erhaltene Produkt mit Epichlorhydrin unter Herstellung eines Polyglycidylethers weiter umsetzt.

Eine andere geeignete Klasse von Polyepoxiden sind Polyglycidylether von phenolischen Novolakharzen.

Ebenfalls geeignet sind ähnliche Polyglycidylether von mehrwertigen Alkoholen wie Ethylenglykol, Diethylenglykol, Triethylenglykol, 1,2-Propylenglykol, 1,4-Propylenglykol, 1,5-Pentandiol, 1,2,6-Hexantriol, Glycerin und Bis(4-hydroxycyclohexyl)-2,2-propan.

Es können auch Polyglycidylester von Polycarbonsäuren verwendet werden.

Die bei der Erfindung bevorzugten Polyepoxide sind die Polyglycidylether von Polyphenolen. Unter diesen sind es diejenigen mit Molekulargewichten von mindestens 350, bevorzugt im Bereich von 350 bis 2 000.

Die polymeren Polyepoxide können mit den organischen Polyolen unter Kettenverlängerung und Vergrößerung des Molekulargewichtes umgesetzt werden. Das Kettenverlängerungsmittel wirkt als chemische Brücke zwischen den niedrigermolekularen Polymerketten und verbindet diese zu Produkten von höherem Molekulargewicht. Die Umsetzung tritt zwischen den primären alkoholischen Hydroxylgruppen unter Öffnung des Epoxidringes und unter Bildung von Etherbindungen und einer sekundären Hydroxylgruppe ein.

Die Kettenverlängerung wird durch Mischen des organischen Polyols und Umsetzung bei einer Temperatur von etwa 120 bis 150 °C in Gegenwart eines Katalysators, wie eines tertiären Amins, in vorteilhafter Weise erreicht. Ein inertes Lösungsmittel kann bei der Umsetzung zugegen sein. Beispiele von geeigneten tertiären Aminen sind Benzyldimethylamin, Dimethylcyclohexylamin, Dimethylethanolamin und Triethylamin. Außer Aminen können andere Katalysatoren verwendet werden.

Die Kettenverlängerer (Komponente B) sind organische Polyole, die mindestens zwei und bevorzugt nur zwei Hydroxylgruppen enthalten. Mischungen von Polyolen können ebenfalls verwendet werden.

Die organischen Polyole können entweder ein niedriges oder ein hohe Molekulargewicht besitzen und haben im allgemeinen Molekulargewichte von etwa 100 bis 3 000, bevorzugt etwa 500 bis 1 000.

Die bei der Erfindung in Betracht kommenden Polyole schließen niedermolekulare Diole und höhere polymere Polyole, wie Polyesterpolyole, Polyetherpolyole ein. Besonders bevorzugt sind Polyesterpolyole und unter ihnen die Polycaprolactonpolyole.

Gut geeignete Diole sind allgemein bekannt. Spezifische Beispiele sind 1,6-Hexandiol, 1,8-Octandiol und Cyclohexandimethanol. Ebenfalls geeignet sind Polyole mit Etherbindungen wie Diethylenglykol und Triethylenglykol. Beispiele von polymeren Polyolen schließen Polyalkylenetherpolyole und Polyesterpolyole, insbesondere hydroxylhaltige Lactonpolyester ein.

Geeignete Polyalkylenetherpolyole, die verwendet werden können, entsprechen der folgenden Formel :

$$H - \left[ O(CHR)_n \right]_m - OH$$

in der der Substituent R Wasserstoff oder ein niedriger Alkylrest mit verschiedenen Substituenten ist, n typischerweise 2 bis 6 und m 2 bis 100 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 500 bis 3 000.

Die Polyesterpolyole können ebenfalls als polymere Polyolkomponente bei der Erfindung verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Ferner lassen sich bei der Erfindung auch Polyesterpolyole, die sich von Lactonen ableiten, benutzen. Diese Produkte erhält man durch die Umsetzung eines Lactons, wie eines ε-Caprolactons mit einem Polyol. Solche Produkte sind in der US-PS 3 169 945 beschrieben.

Als polyfunktionelle SH-Verbindungen (Komponente B) kommen Umsetzungsprodukte von organischen Dihalogeniden mit Natriumpolysulfid in Betracht. Weitere SH-Verbindungen sind z. B. Umsetzungsprodukte von hydroxylgruppenhaltigen, linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure.

Für die als Komponente C eingesetzte Aminoalkohole, die ein verkapptes primäres Amin oder ein tertiäres Amin aufweisen, eignen sich insbesondere Di- und Trialkanolamine, die der allgemeinen Strukturformel

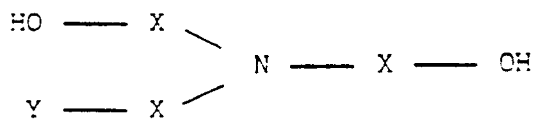

X = Alkylen, verzweigtes, ungesättigtes oder cycloaliphatisches Alkylen, Arylen
Y = OH, H
entsprechen.

Beispiele hierfür sind Methyldiethanolamin, Butyldiethanolamin, Methyldiisopropanolamin, Cyclohexyldiisopropanolamin, Triethanolamin und Triisopropanolamin.

Weitere geeignete Aminoalkohole sind Aminoalkanole, Diaminoalkanole und Polyaminoalkanole, die z. B. folgender Strukturformel entsprechen können :

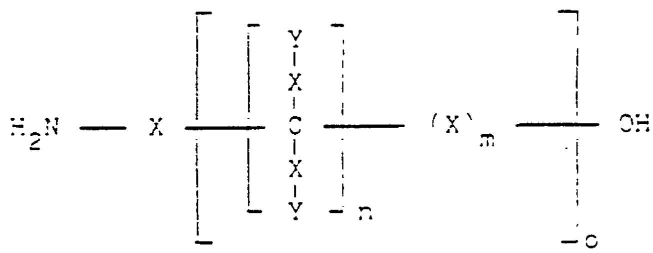

X = Alkylen, verzweigtes, ungesättigtes oder cycloaliphatisches Alkylen, Arylen oder Heteroatom
Y = H, $NH_2$
n = 0 bis 5
m = 0 bis 5
o = 0 bis 3

Beispiele hierfür sind Monoethanolamin, 2-(2-Aminoethoxy)-ethanol, 2-Aminobutanol-1, Neopentylamin.

Zur Umsetzung eignen sich ebenfalls (N,N-Alkylaminoalkyl)alkanolamine und (N,N-Diaminoalkyl)alkanolamine, die der allgemeinen Strukturformel

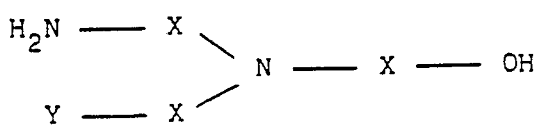

X = Alkylen, verzweigtes, ungesättigtes oder cycloaliphatisches Alkylen, Arylen
Y = $NH_2$, H
entsprechen.

Beispiele hierfür sind (N,N-Methylhydroxyethyl)propandiamin-1,3, N,N,N-Di-2-aminoethyl-2-hydroxyethylamin, N,N,N-2-Aminoethyl-3-aminopropyl-2-hydroxyethylamin.

Weiterhin eignen sich als Aminoalkohole (N,N-Alkylaminoalkyl)-hydroxyalkansäureamide und (N,N-Diaminoalkyl)-hydroxyalkansäureamide der allgemeinen Strukturformel

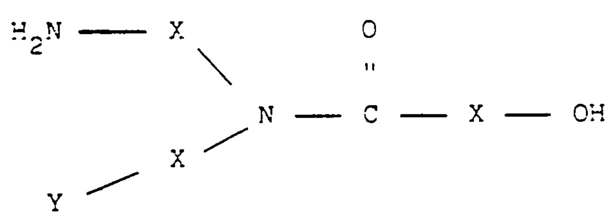

X = Alkylen, verzweigtes, ungesättigtes oder cycloaliphatisches Alkylen, Arylen
Y = H, $NH_2$

Diese Aminoalkohole können einzeln oder als Mischung eingesetzt werden.

Werden Aminoalkohole mit primären Aminogruppen eingesetzt, so müssen diese Aminogruppen vor ihrer Umsetzung mit den Epoxidgruppen verkappt, das heißt z. B. in Ketimine überführt werden. Ketimine sind die Umsetzungsprodukte primärer Aminogruppen mit Ketonen. Die hierfür geeigneten Ketone entsprechen der allgemeinen Strukturformel

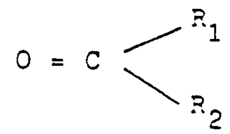

in der $R_1$ und $R_2$ organische Reste sind, die im wesentlichen inert gegenüber der Ketiminbindung sind. Bevorzugt sind $R_1$ und $R_2$ kurze Alkylreste (2 bis 4 Kohlenstoffatome). Häufig ist es vorteilhaft, ein Keton zu verwenden, das unter oder in der Nähe des Siedepunktes von Wasser siedet oder das mit Wasser leicht überdestilliert. Die Umsetzung des Ketons mit dem primären Amin kann durch die folgende Formel erläutert werden :

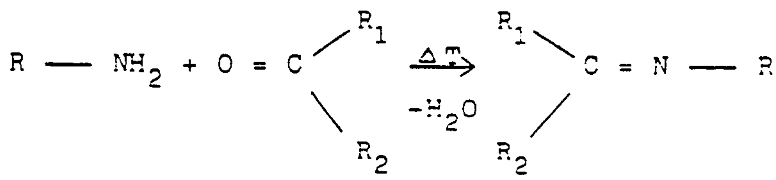


Bevorzugte Beispiele von Ketonen schließen ein Aceton, Methylethylketon, Diethylketon, Methylpropylketon, Methylisopropylketon, Methyl-n-butylketon, Methylisobutylketon, Ethylisopropylketon, Cyclohexanon, Cyclopentanon, Acetophenon. Besonders bevorzugte Ketone sind Aceton, Methylethylketon und Methylisobutylketon.

Nach der Umsetzung sollte das erhaltene Produkt nicht Bedingungen ausgesetzt werden, bei denen die Ketimingruppe unter Bildung einer freien Amingruppe zersetzt wird, solange die Möglichkeit der Gelierung oder Vernetzung durch primäre Aminogruppen existiert. Das Ketimin zersetzt sich bei der Dispergierung in Wasser.

Die Erfindung betrifft auch ein Verfahren zur Herstellung von wasserdispergierbaren Bindemitteln für kationische Elektrotauchlacke auf der Basis von Epoxidharzen mit einem Molekulargewicht von mindestens 350 (A), mit den Epoxidgruppen von (A) reaktionsfähigen polyfunktionellen Verbindungen mit aktivem Wasserstoff (B) sowie Aminoalkoholen (C), welche ggf. ein tertiäres Stickstoffatom besitzen, das dadurch gekennzeichnet ist, daß

A) Epoxidharze mit einem Molekulargewicht von mindestens 350 mit

B) polyfunktionellen Alkoholen, Carbonsäuren und/oder SH-Verbindungen mit einem Molekulargewicht von 300 bis 5 000 sowie zur Erzielung der erforderlichen Wasserdispergierbarkeit mit

C) Aminoalkoholen mit mindestens einem verkappten primären oder einem tertiären Stickstoffatom umgesetzt werden mit der Maßgabe, daß die Reaktion mit der Komponente (C) in einem weitgehend wasserfreien Medium erfolgt.

Die Erfindung betrifft ferner die Verwendung der Bindemittel für Elektrotauchbäder.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren.

Häufig angewandte Methoden zur Vernetzung von Bindemitteln sind z. B. in folgenden Offenlegungsschriften publiziert : DE-OS 2 057 799, europäische Patentanmeldungen 12 463 und 4090 und DE-OS 2 752 256.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Beispiele von geeigneten Aminoplastvernetzungsmitteln sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz enthält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C, aber reagiert. Bei der Herstellung der blockierten Polyisocyanate können beliebige für die Vernetzung geeignete organische Polyisocyanate verwendet werden.

Um dem Kunstharz für die elektrische Abscheidung einen ausreichenden kationischen Charakter zu verleihen, wird im allgemeinen der neutralisierbare Stickstoff pro Gramm der gesamten Harzfeststoffe bevorzugt zwischen 0,3 und 3 Milliäquivalenten gehalten.

Wenn der Aminoalkohol durch eine Ketimingruppe modifiziert ist, ist es vorteilhaft, daß die Kettenverlängerung vor der Anlagerung des ketiminhaltigen Aminoalkohols an das Polyepoxid erfolgt, um die Zersetzung des Ketimins möglichst niedrig zu halten. Die harzartigen Produkte nach der Erfindung können epoxyhaltig oder epoxyfrei sein in Abhängigkeit von den stöchiometrischen Verhältnissen bei der Aminoalkoholanlagerung unter Kettenverlängerung. Wenn ein ketiminhaltiger Aminoalkohol verwendet wird, hydrolisiert die Ketimingruppe des harzartigen Produktes beim Dispergieren in Wasser und jede etwa vorhandene Epoxygruppe setzt sich mit dem primären Amin um, das durch die Hydrolyse des Ketimins gebildet wird.

Wässrige Dispersionen der erfindungsgemäßen Kunstharzprodukte sind als Überzugsmassen sehr geeignet, insbesondere für die Herstellung von Überzügen durch elektrische Abscheidung. Die Überzugsmassen können aber auch in konventioneller Art und Weise auf die Substrate aufgebracht werden. Für die Dispergierung in Wasser werden die harzartigen Produkte neutralisiert, um kationische Gruppen zu bilden, z. B. Salze von tertiären Aminen und, im Falle von hydrolisierten ketiminhaltigen Harzen, Salze von primären Aminen.

Die Neutralisierung der Produkte wird durch Umsetzung eines Teils oder aller Aminogruppen durch eine wasserlösliche Säure, z. B. Ameisensäure, Essigsäure oder Phosphorsäure, erreicht. Der Grad der Neutralisation hängt von dem besonderen Harz ab und es ist im allgemeinen ausreichend, daß nur soviel Säure zugesetzt wird, daß das Harz in Wasser dispergierbar ist.

Die Konzentration der harzartigen Produkte in dem wässrigen Medium hängt von den zu verwendenden Verfahrensparametern ab und ist in der Regel nicht kritisch. Üblicherweise bildet Wasser den Hauptanteil der wässrigen Dispersion. Die wässrige Dispersion kann z. B. etwa 5 bis etwa 50 Gew.-% Harzfeststoffe enthalten.

Außer Wasser kann das wässrige Medium ein koaleszierendes Lösungsmittel enthalten. Durch die Mitverwendung eines koaleszierenden Lösungsmittels wird in manchen Fällen ein besseres Aussehen des Films erreicht. Solche Lösungsmittel schließen Kohlenwasserstoffe, Alkohole, Ester, Ether und Ketone ein. Die bevorzugten koaleszierenden Lösungsmittel sind Monoalkohole, Glykole und Polyole und auch Ketone und Etheralkohole. Spezifische koaleszierende Lösungsmittel sind Isopropanol, Butanol, Isophoron, 4-Methoxy-methylpentanon-2, Ethylen- und Propylenglykol, Monoethyl-, Monobutyl- und Monohexylether von Ethylenglykol und 2-Ethylhexanol. Die Menge des koaleszierenden Lösungsmittels ist nicht kritisch und im allgemeinen werden zwischen etwa 0,1 und 40 Gew.-%, bevorzugt etwa 0,5 bis 25 Gew.-%, bezogen auf das Gesamtgewicht des wässrigen Mediums, verwendet.

In den meisten Fällen enthält die wässrige Dispersion auch Pigmente und andere übliche Zusätze, wie oberflächenaktive Mittel. Es können die üblichen Pigmente verwendet werden, wie Eisenoxide, Bleioxide, Strontiumchromat, Ruß, Kohlenstaub, Titandioxid, Talkum, Bariumsulfat und farbige Pigmente wie Cadmium-gelb, Cadmium-rot, Chrom-gelb und dergleichen. Der Pigmentgehalt der Dispersion wird in der Regel als Verhältnis von Pigment zu Harz ausgedrückt. Bei der Erfindung liegt das Pigment zu Harzverhältnis in der Regel im Bereich von 0,01 bis 5 : 1. Andere übliche Zusatzstoffe können in der Dispersion in der Regel in Mengen von etwa 0,01 bis 3 Gew.-%, bezogen auf das Gesamtgewicht der Harzfeststoffe, vorhanden sein.

Bei der elektrischen Abscheidung der erfindungsgemäßen Kunstharze werden diese in wässriger Dispersion im Kontakt mit einer elektrisch leitenden Anode und einer elektrisch leitenden Kathode gebracht, wobei die Kathode die zu überziehende Oberfläche ist. Während der Berührung mit der wässrigen Dispersion wird beim Anlegen einer Spannung zwischen den Elektroden ein haftender Film der Überzugsmasse auf der Kathode abgeschieden.

Die Bedingungen, unter denen die elektrische Abscheidung erfolgt, sind im allgemeinen denjenigen ähnlich, die zur elektrischen Abscheidung von anderen Überzugsmassen verwendet werden. Üblicherweise liegt die Spannung zwischen etwa 50 und 500 Volt.

Es ist vorteilhaft, daß die Dispersion während der elektrischen Abscheidung ein pH zwischen 3 und etwa 9 hat.

Die elektrische Abscheidung der erfindungsgemäßen Kunstharze kann auf beliebigen Substraten, insbesondere Metallen wie Stahl, Aluminium, Kupfer oder Magnesium erfolgen. Nach der elektrischen Abscheidung kann der Überzug durch Erwärmen auf erhöhte Temperaturen gehärtet werden. Hierfür kommen in der Regel Temperaturen von 90 bis 200 °C und Zeiträume von 1 bis 30 Minuten in Betracht.

Um eine rasche und vollständige Härtung sicherzustellen, ist es manchmal vorteilhaft, einen Katalysator in der Überzugsmasse zu haben. Die Menge des verwendeten Katalysators sollte ausreichend sein, um die Härtung des abgelagerten Filmes zu beschleunigen. Typische Mengen sind Mengen von etwa 0,5 Prozent bis etwa 4 Prozent, bezogen auf das Gewicht der gesamten Harzfeststoffe. In der Regel werden etwa 2 Gew.-% eines solchen Katalysators verwendet. Wenn jedoch die Härtungstemperaturen

hoch genug sind, kann auf den Katalysator verzichtet werden.

Die Erfindung betrifft also auch ein Verfahren zum elektrophoretischen Beschichten eines elektrisch leitenden als Kathode geschalteten Substrates aus einem wäßrigen Bad auf Basis mindestens teilweise mit Säuren neutralisierter kationischer Bindemittel auf der Basis von Epoxidharzen mit einem Molekulargewicht von mindestens 350 (A), mit den Epoxidgruppen von (A) reaktionsfähigen polyfunktionellen Verbindungen mit aktivem Wasserstoff (B) sowie Aminoalkoholen (C), welche ggf. ein tertiäres Stickstoffatom besitzen, wobei die Bindemittel durch Umsetzung selbstvernetzbar gemacht worden sind oder das Bad ein zusätzliches Vernetzungsmittel enthält, dadurch gekennzeichnet, daß als Komponente (B) polyfunktionelle Alkohole, Carbonsäuren und/oder SH-Verbindungen mit einem Molekulargewicht von 300 bis 5 000 und als Komponente (C) Aminoalkohole mit mindestens einem verkappten primären oder einem tertiären Stickstoffatom eingesetzt werden mit der Maßgabe, daß bei der Herstellung der Bindemittel die Reaktion mit der Komponente (C) mit einem weitgehend wasserfreien Medium erfolgt.

Die Erfindung wird in den folgenden Beispielen noch näher erläutert. Alle Angaben über Teile und Prozentsätze sind Gewichtsangaben, falls nicht ausdrücklich etwas anderes festgelegt wird.

## Beispiel 1

Herstellung des Bindemittels I

914 Teile eines handelsüblichen Epoxidharzes auf der Basis Bisphenol A (Epoxidäquivalentgewicht 188), 327 Teile eines Polyesterpolyols (OH-Zahl 208,5) und 79 Teile Xylol werden in einem 4 l Reaktor vorgelegt. Diese Mischung wird unter Vakuum auf 117 °C erhitzt und eine halbe Stunde auf dieser Temperatur gehalten. Hierbei wird aceotrop Wasser ausgekreist. Danach wird auf Normaldruck belüftet und es werden 277 Teile Bisphenol A und 1,9 Teile Dimethylbenzylamin zugesetzt.

Durch die einsetzende exotherme Reaktion steigt die Temperatur auf 165 °C an. Man hält den Ansatz bei dieser Temperatur, bis ein Epoxidäquivalentgewicht von 698 erreicht ist. Dann kühlt man auf 126 °C ab und setzt weitere 3,9 Teile Dimethylbenzylamin zu. Die Temperatur steigt wieder leicht an. Man hält den Ansatz bei 130 °C, bis ein Epoxidäquivalentgewicht von 1 164 erreicht ist.

Dann werden 268 Teile eines Umsetzungsproduktes aus Isopropanolamin und überschüssigem Methylisobutylketon (Aminäquivalent des Ketimins 223) zugesetzt. Man hält den Ansatz für 3 Stunden bei 130 °C und fügt dann 140 Teile Hexylglykol und 1 208 Teile des Vernetzungsmittels I zu. Diese Komponenten werden noch 15 Minuten untergemischt.

Inzwischen wird ein Dispergierbad aus 1 398 Teile destilliertem Wasser, 34 Teile Eisessig und 50 Teile Emulgatorlösung hergestellt. Die Säurezahl dieses Dispergierbades beträgt 23. In das Bad werden nun 2 600 Teile der obenbeschriebenen Harzlösung eingerührt. Nach einer Stunde fügt man nochmals 1 640 Teile destilliertes Wasser zu, nach 30 Minuten werden weitere 1 000 Teile nachgegeben. Die fertige Dispersion wird nun filtriert.

Die Dispersion weist folgende Kenndaten auf :

| | |
|---|---|
| Festkörper | 29,7 % |
| pH-Wert | 6,34 |
| MEQ-Säure | 0,413 |
| MEQ-Base | 0,455 |

## Beispiel 2

Herstellung des Bindemittels II

979 Teile eines handelsüblichen Epoxidharzes auf Basis Bisphenol A (Epoxidäquivalentgewicht 188), 350 Teile eines Polyesterpolyols (OH-Zahl 208,5) und 84 Teile Xylol werden in einem 4 l Reaktor vorgelegt. Diese Mischung wird unter Vakuum auf 117 °C erhitzt und eine halbe Stunde auf dieser Temperatur gehalten, hierbei wird aceotrop Wasser ausgekreist. Danach wird auf Normaldruck belüftet. Jetzt werden 297 Teile Bisphenol A und 2 Teile Dimethylbenzylamin zugesetzt. Die einsetzende Reaktion ist stark exotherm und die Temperatur steigt hierbei auf 165 °C. Man hält den Ansatz bei dieser Temperatur, bis ein Epoxidäquivalentgewicht von 690 erreicht ist und gibt nach Abkühlen auf 125 °C 4 Teile Dimethylbenzylamin zu. Die Temperatur steigt danach wieder an, man hält sie bei 132 °C bis ein Epoxidäquivalentgewicht von 1 155 erreicht ist. Dann gibt man 288 Teile eines Umsetzungsprodukts aus Isopropanolamin und überschüssigem Methylisobutylketon, Aminäquivalentgewicht des Umsetzungsprodukts 233, zu. Man hält den Ansatz für weitere 3,5 Stunden bei 132 °C und gibt dann 150 Teile Hexylglykol, 1 284 Teile des Vernetzungsmittels II zu. Diese Komponenten werden 20 Minuten untergemischt.

Inzwischen bereitet man aus 1 866 Teilen entionisiertem Wasser, 66 Teilen Emulgatorlösung und 45 Teilen Eisessig ein Dispergierbad. In dieses Bad wird die Harzlösung eingerührt. Nach einer Stunde werden weitere 2 175 Teile entionisiertes Wasser zugesetzt und 15 Minuten untergemischt. Danach wird die Dispersion filtriert. Die Dispersion weist folgende Kenndaten auf :

| | |
|---|---|
| Festkörper | 35,5 % |
| pH-Wert | 6,4 |
| MEQ-Säure | 0,444 |
| MEQ-Base | 0,538 |

Darstellung eines Vernetzungsmittels I

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80 % 2,4-Toluylendiisocyanat und etwa 20 % 2,6-Toluylendiisocyanat) beschickt. Es wird Stickstoff eingeleitet und der Kühler wird eingeschaltet. Im Verlauf von 5 Stunden werden 5 550,5 Teile 2-Ethylhexanol allmählich zugegeben, wobei die Temperatur allmählich auf 50 °C steigt. Während die Temperatur von 50 °C aufrecht erhalten wird, werden weitere 3 649,5 Teile 2-Ethylhexanol im Verlauf von 4 Stunden zugegeben. Die Reaktionsmischung wird 75 Minuten bei 50 °C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65,6 °C erwärmt. Im Verlauf von 2 Stunden und 50 Minuten werden 3 184 Teile 1,1,1-Trimethylolpropan zugegeben, wobei die Temperatur von 65,6 auf 120 °C steigt. Die Reaktionsmischung wird bei dieser Temperatur 90 Minuten gehalten, dann werden 10 560 Teile 2-Ethoxiethanol zugegeben. Das entstandene Produkt ist eine Lösung eines Polyurethan-Vernetzungsmittels.

Darstellung eines Vernetzungsmittels II

2 340 g Glycidylester der 2-Methyl-2-Ethylheptansäure werden mit 2 073 g Trimellithsäureanhydrid in einem Reaktionsgefäß auf 130 °C erhitzt. Hierbei springt die stark exotherme Reaktion an. Durch externe Kühlung wird die Reaktion bei 150 °C gehalten, bis eine Säurezahl von 183 erreicht ist. Danach kühlt man auf 90 °C ab und setzt 1 450 g MIBK* zu. Anschließend tropft man 835 g Propylenoxid langsam zu. Bei einer Säurezahl $< 2$ wird die Reaktion abgebrochen. Der Festkörper der Harzlösung wird mit weiterem MIBK* auf 70 % eingestellt.

Darstellung einer Pigmentpaste

146 g eines Umsetzungsprodukts aus einem Epoxidharz mit einem Epoxidäquivalentgewicht von 890 und Diethanolamin-Milchsäuresalz werden mit 199 g entionisiertem Wasser vorgelegt. Hierzu werden 200 g $TiO_2$, 48 g Extender auf Basis Aluminiumsilikat, 11 g Bleisilikat sowie 3 g Ruß gegeben. Die Ausgangskomponenten werden in einem Mahlaggregat auf eine Hegman-Feinheit von 5 bis 7 zerkleinert. Danach gibt man weitere 102 g entionisiertes Wasser zu, um die gewünschte Pastenkonsistenz zu erreichen. Die graue Pigmentpaste ist sehr lagerstabil.

Zubereitung des Elektrotauchbades I

1 917 Teile deionisiertes Wasser und 25 Teile 10 %ige Essigsäure werden vorgelegt. Hierzu werden 2 303 Teile der Bindemitteldispersion I gegeben. Diese Mischung wird mit 775 Teile der obenbeschriebenen Pigmentpaste versetzt. Das Lackbad weist folgende Kenndaten auf :

| | |
|---|---|
| Festkörper | 19,5 % |
| pH-Wert | 6,2 |
| MEQ-Säure | 0,37 |
| MEQ-Base | 0,57 |

Die aus dem Lackbad bei 25 °C während 2 Minuten mit 300 V abgeschiedenen Filme werden bei 185 °C während 20 Minuten eingebrannt. Die Filme sind danach gut verlaufen und weisen eine Schichtdicke von 16 µm auf.

Zubereitung des Elektrotauchbades II

2 000 Teile deionisiertes Wasser und 25 Teile 10 %ige Essigsäure werden vorgelegt. Hierzu werden 1 926 Teile der Bindemitteldispersion II gegeben. Die Mischung wird mit 775 Teilen der obenbeschriebenen Pigmentpaste versetzt. Zur Festkörpereinstellung werden weitere 274 Teile entionisiertes Wasser zugesetzt. Das Lackbad weist folgende Kenndaten auf :

| | |
|---|---|
| Festkörper | 20 % |

MIBK* = Methylisobutylketon

pH 6,2

Die aus diesem Lackansatz bei 25 °C während 2 Minuten abgeschiedenen Filme werden während 20 Minuten bei 185 °C eingebrannt. Die ausgehärteten Filme zeigen sehr gute mechanisch-technologische Eigenschaften.

| | |
|---|---|
| Erichsen-Tiefung | 7 mm |
| Kugelschlagprüfung nach ASTM-Norm D 2795-69 Grenzbelastung der | |
| Frontseite | 92,2 cm · kg |
| Rückseite | 92,2 cm · kg |

Beispiel 3

Herstellung des Bindemittels III

1 018 Teile eines handelsüblichen Epoxidharzes auf Basis Bisphenol A (Epoxidäquivalentgewicht 188), 435 Teile Polytetramethylenglykol (OH-Zahl 174,5) und 72 Teile Xylol werden in einem 4 l Reaktor vorgelegt. Diese Mischung wird unter Vakuum auf 112 °C erhitzt und eine halbe Stunde auf dieser Temperatur gehalten, hierbei wird aceotrop Wasser ausgekreist. Danach wird die Apparatur mit Stickstoff belüftet und während der weiteren Reaktion mit Stickstoff überschleiert. Jetzt werden 308 Teile Bisphenol A und 2,7 Teile Dimethylbenzylamin zugesetzt. Die hierbei einsetzende Reaktion ist stark exotherm, die Temperatur steigt auf 170 °C an. Man hält den Ansatz bei dieser Temperatur, bis ein Epoxidäquivalentgewicht von 610 erreicht ist. Danach kühlt man den Ansatz rasch auf 126 °C ab und setzt weitere 5,5 Teile Dimethylbenzylamin zu. Man läßt die Temperatur auf 133 °C ansteigen und hält sie für die weitere Reaktion bei 133 bis 135 °C, bis ein Epoxidäquivalentgewicht von 1 250 erreicht ist. Dann setzt man 180 Teile des 70 %igen Umsetzungsprodukts in MIBK* aus 2-(Di-2-aminoethyl)aminoethanol und MIBK* und 250 Teile des 70 %igen Umsetzungsprodukts in MIBK* aus Neopentanolamin und MIBK* zu. Man hält den Ansatz für weitere 3 Stunden bei der Temperatur von ca. 133 °C, setzt dann 194 Teile Hexylglykol zu und kühlt hierbei auf 90 °C ab. Dann werden 755 Teile des Vernetzungsmittels I zugegeben und 20 Minuten untergemischt.

Inzwischen bereitet man ein Dispergierbad aus 2 179 Teilen entionisiertem Wasser, 39 Teilen Eisessig und 51 Teilen einer Emulgatorlösung vor. Die Säurezahl des Bades liegt bei 16,7. Hierin wird nun die obenbeschriebene Harzlösung dispergiert. Durch Kühlen hält man eine Temperaturobergrenze von 50 °C ein. Nach einer Stunde setzt man weitere 2 006 Teile entionisiertes Wasser zu und mischt eine halbe Stunde unter. Danach kann die Dispersion filtriert werden. Die Dispersion weist einen Festkörper von 35,2 % auf. Der pH-Wert liegt bei 6,7.

Zubereitung des Elektrotauchbades III

Nach folgendem Rezept wird der Elektrotauchlack mit der Bindemitteldispersion III hergestellt :

2 257 Teile entionisiertes Wasser
25 Teile 10 %ige Essigsäure
1 943 Teile Bindemitteldispersion
775 Teile Pigmentpaste

Aus diesem Lackbad werden auf phosphatiertem Stahlblech bei 25 °C während 2 Minuten mit 280 V Lackfilme abgeschieden. Die Filme werden mit entionisiertem Wasser abgespült und im Umlufttrockenschrank bei 185 °C während 20 Minuten eingebrannt. Die Filme sind glatt verlaufen und weisen eine Schichtdicke von 23 µm auf.

**Patentansprüche**

1. Wasserdispergierbare Bindemittel für kationische Elektrotauchlacke auf der Basis von Epoxidharzen mit einem Molekulargewicht von mindestens 350 (A), mit den Epoxidgruppen von (A) reaktionsfähigen polyfunktionellen Verbindungen mit aktivem Wasserstoff (B) sowie Aminoalkoholen (C), welche ggf. ein tertiäres Stickstoffatom besitzen, dadurch gekennzeichnet, daß als Komponente (B) polyfunktionelle Alkohole, Carbonsäuren und/oder SH-Verbindungen mit einem Molekulargewicht von 300 bis 5 000 und als Komponente (C) Aminoalkohole mit mindestens einem verkappten primären oder einem tertiären Stickstoffatom eingesetzt werden mit der Maßgabe, daß bei der Herstellung der Bindemittel die Reaktion mit der Komponente (C) in einem weitgehend wasserfreien Medium erfolgt.

2. Bindemittel nach Anspruch 1, dadurch gekennzeichnet, daß die Komponente A ein Epoxidharz auf

MIBK* = Methylisobutylketon

Basis Bisphenol A ist.

3. Bindemittel nach Anspruch 1, dadurch gekennzeichnet, daß die Komponente A ein Polyglycidylester ist.

4. Bindemittel nach Anspruch 1 bis 3, dadurch gekennzeichnet, daß die polyfunktionellen Alkohole der Komponente (B) Molekulargewichte von 500 bis 1 000 besitzen.

5. Bindemittel nach Anspruch 1 bis 4, dadurch gekennzeichnet, daß die Komponente B ein linearer Polyester ist.

6. Bindemittel nach Anspruch 1 bis 4, dadurch gekennzeichnet, daß die Komponente B ein linearer Polyether ist.

7. Bindemittel nach Anspruch 1 bis 4, dadurch gekennzeichnet, daß die Komponente B ein lineares Polyurethan, ein lineares Polyamid oder eine lineare Dicarbonsäure ist.

8. Bindemittel nach Anspruch 1 bis 4, dadurch gekennzeichnet, daß die Komponente B ein Polythioether ist.

9. Bindemittel nach Anspruch 1 bis 8, dadurch gekennzeichnet, daß der Anteil der Komponente B 10 bis 50 Gew.-%, bezogen auf das gesamte Bindemittel, beträgt.

10. Bindemittel nach Anspruch 1 bis 9, dadurch gekennzeichnet, daß sie mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt worden sind.

11. Verfahren zur Herstellung von wasserdispergierbaren Bindemitteln für kationische Elektrotauchlacke auf der Basis von Epoxidharzen mit einem Molekulargewicht von mindestens 350 (A), mit den Epoxidgruppen von (A) reaktionsfähigen polyfunktionellen Verbindungen mit aktivem Wasserstoff (B) sowie Aminoalkoholen (C), welche ggf. ein tertiäres Stickstoffatom besitzen, dadurch gekennzeichnet, daß

A) Epoxidharze mit einem Molekulargewicht von mindestens 350 mit

B) polyfunktionellen Alkoholen, Carbonsäuren und/oder SH-Verbindungen mit einem Molekulargewicht von 300 bis 5 000 sowie zur Erzielung der erforderlichen Wasserdispergierbarkeit mit

C) Aminoalkoholen mit mindestens einem verkappten primären oder einem tertiären Stickstoffatom umgesetzt werden mit der Maßgabe, daß die Reaktion mit der Komponente (C) in einem weitgehend wasserfreien Medium erfolgt.

·12. Verwendung der Bindemittel nach Anspruch 1 bis 12 für Elektrotauchbäder.

13. Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel auf der Basis von Epoxidharzen mit einem Molekulargewicht von mindestens 350 (A), mit den Epoxidgruppen von (A) reaktionsfähigen polyfunktionellen Verbindungen mit aktivem Wasserstoff (B) sowie Aminoalkoholen (C), welche ggf. ein tertiäres Stickstoffatom besitzen, wobei die Bindemittel durch Umsetzung selbstvernetzbar gemacht worden sind oder das Bad ein zusätzliches Vernetzungsmittel enthält, dadurch gekennzeichnet, daß als Komponente (B) polyfunktionelle Alkohole, Carbonsäuren und/oder SH-Verbindungen mit einem Molekulargewicht von 300 bis 5 000 und als Komponente (C) Aminoalkohole mit mindestens einem verkappten primären oder einem tertiären Stickstoffatom eingesetzt werden mit der Maßgabe, daß bei der Herstellung der Bindemittel die Reaktion mit der Komponente (C) in einem weitgehend wasserfreien Medium erfolgt.

14. Beschichtetes Substrat, erhalten durch das Verfahren nach Anspruch 13.

## Claims

1. A water-dispersible binder for cationic electrocoating finishes based on epoxy resins having a molecular weight of at least 350 (A), polyfunctional compounds which are reactive toward the epoxide groups of (A) and possess active hydrogen (B), and amino alcohols (C) which may possess a tertiary nitrogen atom, wherein polyfunctional alcohols, carboxylic acids and/or SH compounds having a molecular weight of from 300 to 5 000 are used as component (B) and amino alcohols having at least one blocked primary or one tertiary nitrogen atom are used as component (C), with the proviso that, in the preparation of the binders, the reaction with component (C) is carried out in a substantially anhydrous medium.

2. A binder as claimed in claim 1, wherein component A is an epoxy resin based on bisphenol A.

3. A binder as claimed in claim 1, wherein component A is a polyglycidyl ester.

4. A binder as claimed in claims 1 to 3, wherein the polyfunctional alcohols of component (B) have molecular weights of from 500 to 1 000.

5. A binder as claimed in claims 1 to 4, wherein component B is a linear polyester.

6. A binder as claimed in claims 1 to 4, wherein component B is a linear polyether.

7. A binder as claimed in claims 1 to 4, wherein component B is a linear polyurethane, a linear polyamide or a linear dicarboxylic acid.

8. A binder as claimed in claims 1 to 4, wherein component B is a polythioether.

9. A binder as claimed in claims 1 to 8, wherein the content of component B is from 10 to 50 % by weight, based on the total binder.

10. A binder as claimed in claims 1 to 9, which has been reacted with a partially blocked polyisocyanate which possesses on average one free isocyanate group per molecule and whose blocked isocyanate groups are stable at room temperature.

11. A process for the preparation of a water-dispersible binder for cationic electrocoating finishes based on epoxy resins having a molecular weight of at least 350 (A), polyfunctional compounds which are reactive toward the epoxide groups (A) and possess active hydrogen (B), and amino alcohols (C) which may possess a tertiary nitrogen atom, wherein

A) epoxy resins having a molecular weight of at least 350 are reacted with

B) polyfunctional alcohols, carboxylic acids and/or SH compounds having a molecular weight of from 300 to 5 000 and, in order to achieve the required water dispersibility, with

C) amino alcohols having at least one blocked primary or one tertiary nitrogen atom, with the proviso that the reaction with component (C) is carried out in a substantially anhydrous medium.

12. Use of a binder as claimed in claims 1 to 12 for electrocoating baths.

13. A process for the electrophoretic coating of an electrically conductive substrate which has been made the cathode from an aqueous bath based on cationic binders which have been at least partially neutralized with acids and are based on epoxy resins having a molecular weight of at least 350 (A), polyfunctional compounds which are reactive toward the epoxide groups of (A) and possess active hydrogen (B), and amino alcohols (C) which may possess a tertiary nitrogen atom, the binder having been rendered self-crosslinkable by reaction, or the bath containing an additional crosslinking agent, wherein polyfunctional alcohols, carboxylic acids and/or SH compounds having a molecular weight of from 300 to 5 000 are used as component (B) and amino alcohols having at least one blocked primary and one tertiary nitrogen atom are used as component (C), with the proviso that, in the preparation of the binders, the reaction with component (C) is carried out in a substantially anhydrous medium.

14. A coated substrate obtained by a process as claimed in claim 13.

**Revendications**

1. Liants dispersibles dans l'eau pour vernis d'électrodéposition cationiques, à base de résines époxydiques présentant un poids moléculaire d'au moins 350 (A), de composés polyfonctionnels à hydrogène actif (B), capables de réagir avec les groupes époxyde de (A), ainsi que d'aminoalcools (C), qui possèdent, le cas échéant, un atome d'azote tertiaire, caractérisés par le fait que sont mis en œuvre, comme composant (B), des alcools, acides carboxyliques et/ou composés à groupes SH polyfonctionnels, présentant un poids moléculaire de 300 à 5 000, et, comme composant (C), des aminoalcools présentant au moins un atome d'azote primaire coiffé ou un atome d'azote tertiaire, dans la mesure où, lors de la préparation des liants, la réaction avec le composant (C) a lieu dans un milieu sensiblement anhydre.

2. Liants selon la revendication 1, caractérisés par le fait que le composant (A) est une résine époxydique à base de bisphénol A.

3. Liants selon la revendication 1, caractérisés par le fait que le composant A est un polyglycidylester.

4. Liants selon l'une des revendications 1 à 3, caractérisés par le fait que les alcools polyfonctionnels du composant (B) possèdent des poids moléculaires allant de 500 à 1 000.

5. Liants selon l'une des revendications 1 à 4, caractérisés par le fait que le composant (B) est un polyester linéaire.

6. Liants selon l'une des revendications 1 à 4, caractérisés par le fait que le composant (B) est un polyéther linéaire.

7. Liants selon l'une des revendications 1 à 4, caractérisés par le fait que le composant (B) est un polyuréthanne linéaire, un polyamide linéaire, ou un acide dicarboxylique linéaire.

8. Liants selon l'une des revendications 1 à 4, caractérisés par le fait que le composant (B) est un polythioéther.

9. Liants selon l'une des revendications 1 à 8, caractérisés par le fait que la fraction constituée par le composant (B) s'élève de 10 à 50 % en poids par rapport à la totalité du liant.

10. Liants selon l'une des revendications 1 à 9, caractérisés par le fait qu'ils ont réagi avec un polyisocyanate partiellement bloqué, qui possède, en moyenne, un groupe isocyanate libre par molécule et dont les groupes isocyanate bloqués sont stables à la température ambiante.

11. Procédé pour la préparation de liants dispersibles dans l'eau pour vernis d'électrodéposition cationiques, à base de résines époxydiques présentant un poids moléculaire d'au moins 350 (A), de composés polyfonctionnels à hydrogène actif (B), susceptibles de réagir avec les groupes époxyde de (A), ainsi que d'aminoalcools (C), qui possèdent, le cas échéant, un atome d'azote tertiaire, caractérisé par le fait que l'on fait réagir

A) des résines époxydiques présentant un poids moléculaire d'au moins 350, avec

B) des alcools, acides carboxyliques et/ou composés à groupes SH polyfonctionnels, présentant un poids moléculaire allant de 300 à 5 000, de même que, pour obtenir la dispersibilité dans l'eau nécessaire, avec

C) des aminoalcools présentant au moins un atome d'azote primaire coiffé ou un atome d'azote tertiaire, dans la mesure où la réaction avec le composant (C) a lieu dans un milieu sensiblement anhydre.

12. Utilisation des liants selon l'une des revendications 1 à 12 pour des bains d'électrodéposition.

13. Procédé pour le revêtement électrophorétique d'un substrat monté en cathode, électriquement conducteur, à partir d'un bain aqueux à base de liants cationiques au moins partiellement neutralisés avec des acides, à base de résines époxydiques présentant un poids moléculaire d'au moins 350 (A), de composés polyfonctionnels à hydrogène actif (B), susceptibles de réagir avec les groupes époxyde de (A), ainsi que d'aminoalcools (C) qui possèdent, le cas échéant, un atome d'azote tertiaire, les liants ayant été rendus auto-réticulables ou bien le bain renfermant un agent de réticulation additionnel, caractérisé par le fait qu'on a mis en œuvre, comme composant (B), des alcools, acides carboxyliques et/ou composés à groupes SH polyfonctionnels, présentant un poids moléculaire allant de 300 à 5 000 et, comme composant (C), des aminoalcools présentant au moins un atome d'azote primaire coiffé ou un atome d'azote tertiaire, dans la mesure où, lors de la préparation des liants, la réaction avec le composant (C) a lieu dans un milieu sensiblement anhydre.

14. Substrat revêtu, obtenu par le procédé selon la revendication 13.